# EUROPÄISCHE PATENTANMELDUNG

(11) **EP 2 570 686 A2**
(43) Veröffentlichungstag der Anmeldung: **20.03.2013**
(21) Anmeldenummer: 12180266.4
(22) Anmeldetag: 13.08.2012
(51) Int. Cl.: F16C 19/55, F16C 19/18

(54) **Freilauf-Stützlageranordnung für ein Maschinenelement**

(30) Priorität: 19.09.2011 DE 102011082951
(71) Anmelder: Schaeffler Technologies AG & Co. KG, 91074 Herzogenaurach (DE)
(72) Erfinder: Walther, Volkhard, 91074 Herzogenaurach (DE)

(57) **Zusammenfassung**

Die Erfindung betrifft eine Freilauf-Stützlageranordnung (22, 46) für ein Maschinenelement (24, 48) mit wenigstens einem Freilauf (4, 28, 52) und mit zumindest zwei gegeneinander angestellten Schräglagern (2', 3', 26', 27', 50', 51') als Stützlager (2, 3, 26, 27, 50, 51), wobei das Maschinenelement (24, 48) mittels der Schräglager (2', 3', 26', 27', 50', 51') an einem Wellenelement (25, 71) um eine Rotationsachse (1a, 22a, 46a) drehbar gelagert ist und wobei mittels des Freilaufes (4, 28, 52) zwischen dem Wellenelement (25, 71) und dem Maschinenelement (24, 48) eine drehmomentfeste Verbindung einrück- und ausrückbar ist, und wobei die Stützlager (2, 3, 26, 27, 50, 51) gegenüber dem Freilauf (4, 28, 52) radial versetzt sind.

## Beschreibung

### Gebiet der Erfindung

Freilauf-Stützlageranordnung für ein Maschinenelement mit wenigstens einem Freilauf und mit zumindest zwei gegeneinander angestellten Schräglagern als Stützlager, wobei das Maschinenelement mittels der Schräglager an einem Wellenelement um eine Rotationsachse drehbar gelagert ist und wobei mittels des Freilaufes zwischen dem Wellenelement und dem Maschinenelement eine drehmomentfeste Verbindung einrück- und ausrückbar ist, und wobei die Stützlager gegenüber dem Freilauf radial versetzt sind

### Hintergrund der Erfindung

Der Kraft-Reibschluss in Freiläufen kann nach unterschiedlichsten Wirkprinzipien hergestellt werden. In DE 101 48 961 A1 ist ein Bandfreilauf beschrieben. Ein Metallband ist um das Wellenteil mit einer Windung gewickelt. Die Enden des Metallbands überlappen sich in Umfangsrichtung. Ein Ende ist an einem Nabenteil befestigt und wird von diesem festgehalten. Das andere Ende liegt am Wellenteil an. Beim Verdrehen des Wellenteils wirkt eine Reibkraft zwischen dem Wellenteil und dem Ende, durch welche das Band zugezogen wird. Im Zusammenwirken mit einer sich dabei zwischen den einander überlappenden Flächen des Bandes aufbauenden Gegenreibkraft werden die Teile gegeneinander abgebremst und gehalten.

In anderen Freiläufen sind zwischen Wellen- und Nabenteil Klemmelemente radial zwischen einander gegenüberliegenden Bahnen der Antriebs- und Abtriebkupplungsteile des Freilaufs, beispielsweise Klemmkörper bzw. Klemmrollen oder -Kugeln, am Umfang verteilt. Bei Gleichlauf sind die beiden Kupplungsteile in einem Betriebszustand "Sperren" über die Klemmelemente drehmomentfest miteinander verbunden und Drehmomente können übertragen werden. Dazu weist eine der Freilaufbahnen rampenähnliche Abschnitte auf (z.B. am Freilaufstern), durch welche keilförmige Klemmspalte zwischen den Bahnen begrenzt sind und in denen sich zwischen An- und Abtriebskeil Klemmrollen verklemmen. Alternativ sind die Freiläufe mit Klemmkörpern versehen, die sich im Sperrmodus durch Aufrichten zwischen den Freilaufbahnen verklemmen.

Derartige Freiläufe sind oft in Anordnungen zusammen mit Stützlagern des Freilaufs verbaut. Die vorwiegend radial wirkenden Stützlager sind hinsichtlich ihrer Wirkung parallel zum Freilauf angeordnet, d.h. sie sind axial neben dem Freilauf angeordnet und stützen im Sperrmodus einen Anteil aus Kippmomenten am Maschinenteil resultierender radialer Kräfte, die ansonsten auf den Freilauf wirken würden. Im Überholmodus ist das Maschinenteil mittels der Stützlager drehbar zum Wellenteil gelagert und alle radialen und axialen Kräfte werden durch die Stützlager aufgenommen. In diesen Anwendungen werden bevorzugt Rollen- oder Kugellager eingesetzt.

Eine derartige Anordnung zeigt DE 198 29 469 A1. Eine Freilauf-Stützlageranordnung ist zwischen einer Riemenscheibe und einem Zapfen angeordnet und weist ein ringförmiges Abtriebskupplungsteil mit innenzylindrischer Freilaufbahn für Klemmrollen sowie zwei Lagersitze auf. Weiterhin ist die Freilauf-Stützlageranordnung aus einem ringförmigen Antriebskupplungsteil des Freilaufs mit Sperrrampen sowie aus zwei Kugellagern gebildet. Jedes der Kugellager sitzt mit äußeren Lagerringen links und rechts des Freilaufs in einem der Lagersitze des Antriebskupplungsteils und mit inneren Lagerringen links und rechts neben dem Antriebskupplungselement.

DE - AS 1 0997 304 zeigt ein selbstschaltendes Wechselgetriebe für Fahrräder, motorisch betriebene Fahrzeuge aller Art und für Landmaschinen mit einem Zahnrad, das mittels einer Freilauf-Stützlageranordnung gelagert ist. In dem beschriebenen Beispiel ist das Zahnrad ein Kettenrad, das mit einem Rollenfreilauf und zwei Schrägkugellagern gestützt ist. Die Schrägkugellager weisen zwar gemeinsam mit dem Freilauf eine Rotationsachse auf, die Teilkreise der Wälzkörper der Schrägkugellager sind jedoch radial näher an der Rotationsachse als der des Freilaufs selbst. Dabei weisen die Teilkreise der Schrägkugellager die gleichen Durchmesser auf, so dass sich die Kugeln beider Schrägkugellager axial einander gegenüberliegen. In diesen Anordnungen sind demnach die Reihen der Wälzkörper gegenüber den Klemmelementen radial zur Rotationsachse näher hin versetzt als der Freilauf.

Schrägkugellager werden in Freilauf-Stützlageranordnungen von Maschinenelementen eingesetzt, die hohen Kippmomenten und axialen Kräften ausgesetzt sind, da mit den axial gegeneinander angestellten Schräglagern radiale und axiale Kräfte gestützt werden können.

### Beschreibung der Erfindung

Die Aufgabe der Erfindung ist es, eine stabile und im Bauraum reduzierte Freilauf-Stützlageranordnung zu schaffen.

Diese Aufgabe ist nach dem Gegenstand der unabhängigen Ansprüche 1 und 5 gelöst.

Die Stützlager sind in diesem Fall Wälzlager, vorzugsweise Kugellager oder Rollenlager. Diese weisen wenigstens eine Reihe Wälzkörper auf oder mehr Reihen.

In Wälzlagern liegen sich in der Regel die Kontakte der Wälzkörper mit den Wälzlaufbahnen an einer Kontaktlinie gegenüber.

Die Kontaktlinie verläuft bei Kugeln durch das Kugelzentrum und durch die Kontakte. Bei Rollen schneidet die Kontaktlinie die Rollachse der Rollen in der Regel mittig.

In Radiallagern verlaufen die Kontaktlinie senkrecht zur Rotationsachse und schneiden diese. Bei Axiallagern sind die Kontaktlinien parallel zur Rotationsachse ausgerichtet. Erfindungsgemäß werden dagegen in der Freilauf-Stützlageranordnung Schräglager eingesetzt, durch die radiale und axiale Kräfte aufgenommen werden können. Die Kontaktlinien der jeweiligen Reihe Wälzkörper der Schräglager sind dementsprechend um einen Winkel α zur Rotationsachse geneigt, der größer als 0 ° und kleiner als 90° ist und vorzugsweise in einem Bereich von 30° ≤ α ≤ 60° liegt. Die Anwendung der Erfindung ist vorzugsweise für Schrägkugellager und ggf. für Schrägrollenlager mit Tonnenrollen oder anders ballig ausgeführten Rollen vorgesehen. Schräglager werden in der Regel paarweise verbaut und gegeneinander vorgespannt, um zu großen Schlupf zwischen den Wälzkörpern und Wälzlaufbahnen zu vermeiden.

Maschinenelemente sind Naben, beispielsweise von Rädern, Trommeln, Riemenscheiben, Wellen, Lüfterräder und Zahnräder sowie weitere denkbare antreibbare oder treibende Maschinenelemente. Wellenelemente sind Bolzen, Zapfen und andere Drehzahl und Drehmomente übertragende Bauteile.

Freiläufe sind durch Reibung kraftschlüssig arbeitende Sperrkupplungen, die nach dem Prinzip des Rollengesperres oder Reibgesperres arbeiten und wenigstens ein Antriebskupplungsteil und ein Abtriebskupplungsteil aufweisen. Das Antriebskupplungsteil sitzt beispielsweise auf einem Wellenelement oder außen an bzw. auf einem durch eine Welle angetriebenen Bauteil. Alternativ ist dieses direkt an dem Wellenelement ausgebildet. Das Abtriebskupplungsteil ist beispielsweise einer Nabe des Maschinenteils zugeordnet und ist bei Gleichlauf der Kupplungsteile durch das Antriebskupplungsteil im Drehsinn des um die Rotationsachse der Rotorwelle rotierenden Antriebskupplungsteils angetrieben.

Bevorzugte Anwendung der Erfindung sind Riemenräder von Starter-Generator-Anordnungen, Kettenzahnräder und andere Zahnräder von Getrieben.

Der Freilauf ist bei diesem Gleichlauf im Sperrmodus gesperrt. Überholt das Abtriebskupplungsteil das Antriebskupplungsteil, d.h. ist die Drehzahl des Abtriebskupplungsteils bei gleichem Drehsinn der Kupplungsteile größer als die des Antriebskupplungsteils, wird der Freilauf gelöst und die Teile laufen im Überholmodus relativ zueinander frei. Letzteres gilt auch, wenn sich der Drehsinn des Antriebskupplungsteils gegenüber dem des Abtriebskupplungsteils ändern sollte. Freiläufe sind die anfangs beschriebenen Bandfreiläufe oder Rollen- bzw. Klemmkörperfreiläufe.

Gemäß einer Erfindung ist vorgesehen, dass die Schräglager sich im Radius voneinander unterscheidende Teilkreise aufweisen. Wälzlager sind durch die Größe ihres Teilkreises charakterisiert. Ein Teilkreis ist ein gedachter durch die Mittelachsen gleich großer Wälzkörper einer Reihe des Wälzlagers gelegter und um die Rotationsachse des Wälzlagers umlaufender Kreis. Bei Kugeln sind die Mittelachsen die Kugelzentren, bei Rollen deren Rotationsachsen. Der Umfang des Teilkreises bestimmt z.B. die maximale Anzahl der Wälzkörper einer Reihe in Abhängigkeit von deren Durchmesser.

Wie anfangs erwähnt, werden durch Schräglager axiale und radiale Kräfte aufgenommen. Die Richtung der axialen Kräfte kann im Betrieb des Maschinenelements wechseln oder konstant in einer Richtung verharren. Darüber hinaus kann eines der Schräglager höheren Radialbelastungen ausgesetzt sein als das andere. Im Interesse der Gesamtlebensdauer der Freilauf-Stützlagereinheit wurden die Stützlager des Standes der Technik bisher nach den Anforderungen an das am höchsten belastete Schräglager ausgelegt. Das geringer belastete Schräglager war entsprechend überdimensioniert. Dadurch wurden entsprechend unnötig hohe Kosten verursacht und unnötig Bauraum beansprucht.

Durch den Gegenstand der Erfindung ist es möglich jedes der Stützlager für sich individuell den tatsächlichen Anforderungen angepasst auszulegen, so dass beispielsweise eines in seinen Abmessungen kleiner und das andere größer als das andere ist. Die Kosten zur Herstellung und der beanspruchte Bauraum sind damit reduziert.

Die Stützlager gemäß Erfindung sind axial neben dem Freilauf angeordnet. Alternativ ist mit einer Ausgestaltung der Erfindung vorgesehen, dass die Teilkreise der Stützlager in einer gemeinsamen von der Rotationsachse senkrecht durchstoßenen Radialebene liegen. Dementsprechend ist der Teilkreis eines der Stützlager und sein Außendurchmesser so klein, dass es konzentrisch in dem anderen Stützlager angeordnet ist. Vorzugsweise sind die Teilkreise in einer Radialebene angeordnet, die die Klemmkörper des Freilaufs möglichst mittig schneidet.

Freilauf-Stützlageranordnungen des bisher bekannten Standes der Technik beanspruchen axial Bauraum für zwei der Stützlager und den für den Freilauf. Demgegenüber kann mit den Anordnungen gemäß Erfindung der Bedarf an axialem Bauraum auf den für den Freilauf und für nur ein Stützlager reduziert werden. Darüber hinaus kann der Bedarf an axialem Bauraum demgegenüber noch weiter auf nur den Bedarf für den Freilauf reduziert werden, wenn der Freilauf und beide Stützlager gemeinsam ineinander geschachtelt in einer Radialebene liegen.

Andererseits kann es von Vorteil sein, wenn, wie eine Ausgestaltung vorsieht, die auf der Rotationsachse liegenden Zentren der Teilkreise axial zueinander beabstandet sind. Dementsprechend liegen die Teilkreise in unterschiedlichen senkrecht von der Rotationsachse durchstoßenen Radialebenen. In diesem Fall kann wenigstens eine der Reihen der Stützlager in Bereiche verlegt werden, wo der beanspruchte Bauraum ohnehin zur Verfügung steht. Darüber hinaus wirkt sich axialer Abstand unter Umständen positiv auf die Verteilung der Belastungen aus.

Eine zur Lösung der Aufgabe bestimmte weitere Erfindung sieht vor, dass die Schräglager gemeinsam einen ersten Lagerring und einen zweiten Lagerring aufweisen. Dabei ist es unerheblich, ob die Wälzkörperreihen der Stützlager zueinander gleiche oder unterschiedliche Teilkreise aufweisen oder ob diese in einer gemeinsamen oder unterschiedlichen Radialebenen liegen. An dem ersten Lagerring und an dem zweiten Lagerring ist für jedes der Schräglager jeweils mindestens eine Wälzlaufbahn für eine Reihe Wälzkörper ausgebildet. Vorzugsweise ist sind an einem Lagerring Wälzlaufbahnen für beide Wälzlager und an dem anderen Lagerring wenigstens die Wälzlaufbahn für die Wälzkörper eines der Stützlager ausgebildet.

Der erste Lagerring ist drehfest mit dem Wellenelement und der zweite Lagerring drehfest mit dem Maschinenelement verbunden. Ein Lagerring weist die inneren Wälzlaufbahnen und einer die äußeren Wälzlaufbahnen auf. An inneren Wälzlaufbahnen ist der Radius Wälzkreises kleiner als der Teilkreisradius und an äußeren Wälzlaufbahnen ist der Radius des Wälzkreises größer. Wälzkreise sind Bahnen, an denen die Wälzkörper im Kontakt mit den Wälzlaufbahnen abwälzen.

Mit einer Ausgestaltung der Erfindung ist vorgesehen, dass die Klemmelemente des Freilaufs radial zwischen einem Abschnitt des ersten Lagerrings und einem Abschnitt des zweiten Lagerrings angeordnet sind. Dabei sind die Freilaufbahnen, mit oder ohne Rampen, direkt an dem jeweiligen Lagerring oder an separaten Freilaufringen ausgebildet.

Eine weitere Ausgestaltung der Erfindung sieht vor, dass die Klemmelemente umfangsseitig mit Abstand zueinander angeordnete Klemmrollen sind, die in Wirkverbindung mit Freilaufbahnen des Freilaufs stehen. Jeweils eine Freilaufbahn ist drehmomentfest dem Maschinenelement und eine drehmomentfest mit dem Wellenelement verbunden. Die Klemmrollen sind zwischen den Freilaufbahnen angeordnet, wobei eine der Freilaufbahnen die Rampen aufweist.

Derartige Freilauf-Stützlageranordnungen sind vorteilhaft in Anordnungen des Maschinen- und Fahrzeugbaus eingesetzt, in denen axialer Bauraum begrenzt ist und wo im Überholmodus des Freilaufs durch die Stützlageranordnung signifikante Axialkräfte und/oder Kippmomente abgestützt werden müssen.

### Beschreibung der Zeichnungen

Die Erfindung wird nachfolgend anhand von Ausführungsbeispielen näher erläutert.

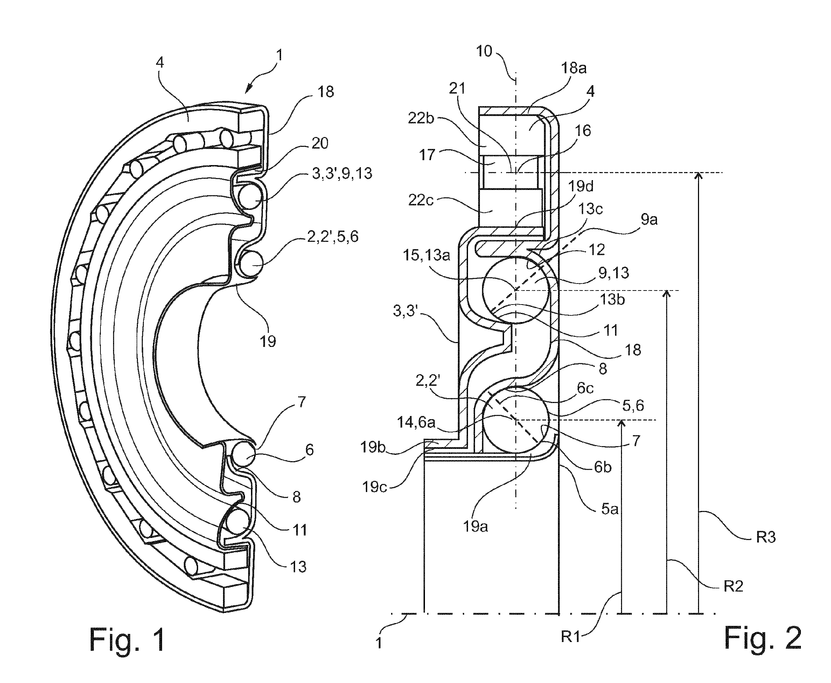

Figur 1 zeigt eine Hälfte einer Freilauf-Stützlagereinheit 1, längs der Rotationsachse geschnitten. Figur 2 zeigt den Längsschnitt der Freilauf-Stützlagereinheit 1 nach Figur 1 in vergrößerter Ansicht.

Die Freilauf-Stützlagereinheit 1 weist ein als Schräglager 2' ausgebildetes erstes Stützlager 2, ein als Schräglager 3' ausgebildetes zweites Stützlager 3 und einen Freilauf 4 auf. Das erste Stützlager 2 ist aus einer ersten Reihe 5 Wälzkörper in Form von Kugeln 6, einer inneren Wälzlaufbahn 7 sowie einer äußeren Wälzlaufbahn 8 jeweils für die Kugeln 6 gebildet. Das zweite Stützlager 3 ist aus einer zweiten Reihe 9 Wälzkörper in Form von Kugeln 13, aus einer inneren Wälzlaufbahn 11 sowie aus einer äußeren Wälzlaufbahn 12 jeweils für die Kugeln 13 gebildet.

Die Kugeln 6 und 13 der Reihen 5 und 9 liegen in einer gemeinsamen Radialebene 10, welche senkrecht von der Rotationsachse 1a der Freilauf-Stützlagereinheit 1 durchstoßen ist. Die Kontaktlinien 5a bzw. 9a verlaufen durch die in der der Radialebene 10 liegenden Kugelzentren 6a und 13a und durch die jeweiligen Kontakte 6b - 6c bzw. 13b - 13c mit den Wälzlaufbahnen 7 - 8 bzw. 11 - 12 und sind zur Rotationsachse 1a und damit zur Radialebene 10 mit spitzem Winkel geneigt, wobei die Kontaktlinie 5a in der jeweiligen Axialebene in eine andere Richtung geneigt ist als die Kontaktlinie 9a in der gleichen Axialebene.

Der Radius R1 des durch die Kugelzentren 6a verlaufenden Teilkreises 14 ist kleiner als der Radius R2 des durch die Kugelzentren 13a verlaufenden Teilkreises 15 der Kugeln 13. Der Radius R2 des Teilkreises 15 der Kugeln 13 ist kleiner als der Radius R3 des die Rollachsen schneidenden Teilkreises 16 der Klemmrollen 17 des Freilaufs 4. Die Teilkreise 14, 15 und 16 liegen gemeinsam in der Radialebene 10.

Die Schräglager 2' und 3' weisen gemeinsam einen ersten Lagerring 18 und einen zweiten Lagerring 19 auf. Der erste Lagerring 18 ist einteilig ausgebildet. An dem ersten Lagerring 18 ist die äußere Wälzlaufbahn 8 der ersten Reihe 5 und die äußere Wälzlaufbahn 12 der zweiten Reihe 9 ausgebildet. Der zweite Lagerring 19 ist zweiteilig aus den Teilen 19a und 19b gebildet. Das Teil 19a ist mit der inneren Wälzlaufbahn 7 der ersten Reihe 5 versehen und das Teil 19b weist die innere Wälzlaufbahn 11 der zweiten Reihe 9 auf. Die Lagerringe 18 und 19 sind an dem Radialspalt 20 um das Spaltmaß um ein Spaltmaß zueinander beabstandet und um die Rotationsachse 1a relativ zueinander rotierbar. Die Schräglager 2' und 3' sind gegeneinander verspannt, in dem das Teil 19b an dem zylindrischen Abschnitt 19c auf das Teil 19a geschoben und federelastisch gegen die Kugeln 13 vorgespannt wird, wodurch sich gleichzeitig das Teil 19a federelastisch an den Kugeln 6 abstützt.

Der Freilauf 4 weist zwei Freilaufringe 22b und 22c sowie die als Klemmrollen 17 ausgebildeten Klemmelemente 21 auf. Der Freilaufring 22b sitzt fest in einem innenzylindrischen Abschnitt 18a des Lagerrings 18 und der Freilaufring 22c sitzt fest auf einem außenzylindrischen Abschnitt 19d des Lagerrings 19.

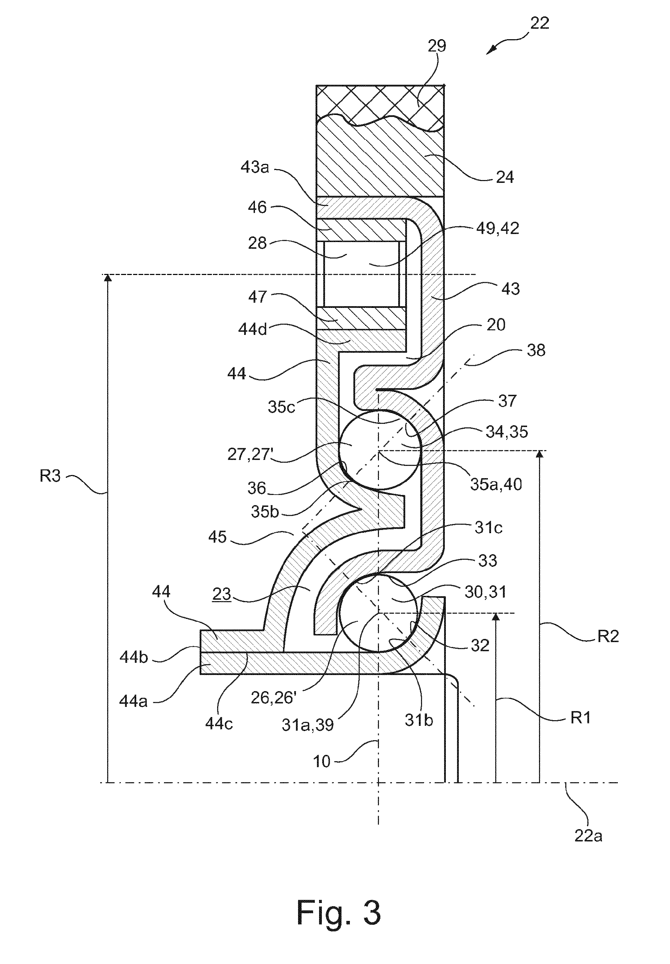

Figur 3 zeigt hälftig einen Längsschnitt einer Freilauf-Stützlageranordnung 22 in einem Längsschnitt entlang der Rotationsachse 22a der Freilauf-Stützlageranordnung 22. Die Freilauf-Stützlageranordnung 22 sieht eine Freilauf-Stützlagereinheit 23 vor, die radial zwischen einem Maschinenelement 24 und einem Wellenelement 25 angeordnet ist. An dem Maschinenelement 24, welches ein Riemenrad einer nicht weiter dargestellten Starter-Generatoranordnung ist, greift ein Riemen 29 an.

Die Freilauf-Stützlagereinheit 23 weist ein als Schräglager 26' ausgebildetes erstes Stützlager 26, ein als Schräglager 27' ausgebildetes zweites Stützlager 27 und einen Freilauf 28 auf. Das erste Stützlager 26 ist aus einer ersten Reihe 30 Wälzkörper in Form von Kugeln 31, einer inneren Wälzlaufbahn 32 sowie aus einer äußeren Wälzlaufbahn 33 jeweils für die Kugeln 31 gebildet. Das zweite Stützlager 27 ist aus einer zweiten Reihe 34 Wälzkörper in Form von Kugeln 35, einer inneren Wälzlaufbahn 36 sowie aus einer äußeren Wälzlaufbahn 37 jeweils für die Kugeln 35 gebildet.

Die Kugeln 31 und 35 der Reihen 30 und 34 liegen in einer gemeinsamen Radialebene 10, welche senkrecht von der Rotationsachse 22a der Freilauf-Stützlageranordnung 22 durchstoßen ist. Die Rotationsachse 22a entspricht der Rotationsachse der Freilauf-Stützlagereinheit 23. Die Kontaktlinien 45 bzw. 38 verlaufen durch die in der Radialebene 10 liegenden Kugelzentren 31 a und 35a und durch die jeweiligen Kontakte 31b - 31 c bzw. 35b - 35c mit den Wälzlaufbahnen 32 - 33 bzw. 36 - 37 und sind zur Rotationsachse 22a und damit zur Radialebene 10 mit spitzem Winkel geneigt, wobei die Kontaktlinien 45 in der jeweiligen Axialebene in eine andere Richtung geneigt sind als die Kontaktlinien 38 in der jeweils gleichen Axialebene.

Der Radius R1 des durch die Kugelzentren 31 a verlaufenden Teilkreises 39 ist kleiner als der Radius R2 des durch die Kugelzentren 35a verlaufenden Teilkreises 40 der Kugeln 35. Der Radius R2 des Teilkreises 40 der Kugeln 35 ist kleiner als der Radius R3 des die Rollenachsen schneidenden Teilkreises 41 der Klemmrollen 42 des Freilaufs 28. Die Teilkreise 39 und 40 liegen gemeinsam in der Radialebene 10. Der Teilkreis des Freilaufs bzw. der Klemmrollen ist ein um die Rotationsachse verlaufender Kreis, der die Rollenachsen der in Umfangsrichtung aufeinander folgenden Rollen des Freilaufs schneidet

Die Schräglager 26' und 27' weisen gemeinsam einen ersten Lagerring 43 und einen zweiten Lagerring 44 auf. Der erste Lagerring 43 ist einteilig ausgebildet. An dem ersten Lagerring 43 ist die äußere Wälzlaufbahn 33 der ersten Reihe 30 und die äußere Wälzlaufbahn 37 der zweiten Reihe 34 ausgebildet. Der zweite Lagerring 44 ist zweiteilig aus den Teilen 44a und 44b gebildet. Das Teil 44a ist mit der inneren Wälzlaufbahn 32 der ersten Reihe 30 und an das Teil 44b mit der inneren Wälzlaufbahn 36 der zweiten Reihe 34 versehen. Die Lagerringe 43 und 44 sind an dem Radialspalt 20 um ein Spaltmaß voneinander getrennt und um die Rotationsachse 22a relativ zueinander rotierbar. Die Schräglager 26' und 27' sind gegeneinander verspannt, weil das Teil 44b an dem zylindrischen Abschnitt 44c auf das Teil 44a geschoben und federelastisch gegen die Kugeln 35 vorgespannt ist, wodurch sich gleichzeitig das Teil 44a federelastisch an den Kugeln 31 abstützt.

Der Freilauf 28 weist zwei Freilaufringe 46 und 47 sowie als Klemmelemente 49 die Klemmrollen 42 auf. Der Freilaufring 46 sitzt fest in einem innenzylindrischen Abschnitt 43a des Lagerrings 43 und der Freilaufring 47 sitzt fest auf einem außenzylindrischen Abschnitt 44d des Lagerrings 44. Das Maschinenelement 24 sitzt außen fest auf dem Lagerring 43 und der Lagerring 44 sitzt außen fest auf dem Wellenelement 25.

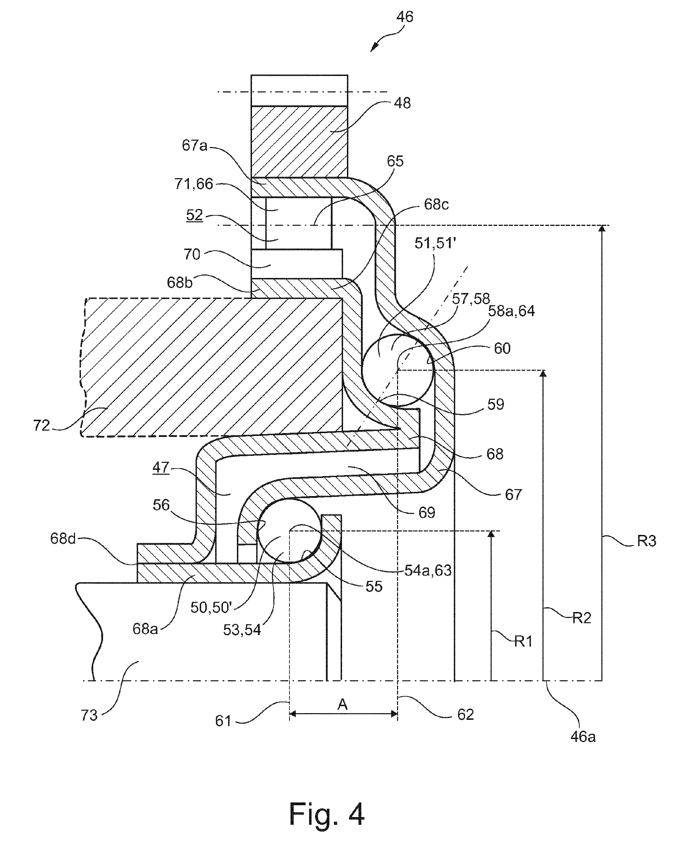

Figur 4 zeigt hälftig einen Längsschnitt einer Freilauf-Stützlageranordnung 46 in einem Längsschnitt entlang der Rotationsachse 46a der Freilauf-Stützlageranordnung 46. Die Freilauf-Stützlageranordnung 46 sieht eine Freilauf-Stützlagereinheit 47 vor, auf der ein Maschinenelement 48 aufgenommen ist. Das Maschinenelement 48 ist ein Zahnrad eines Getriebes.

Die Freilauf-Stützlagereinheit 47 weist ein als Schräglager 50' ausgebildetes erstes Stützlager 50, ein als Schräglager 51' ausgebildetes zweites Stützlager 51 und einen Freilauf 52 auf. Das erste Stützlager 50 ist aus einer ersten Reihe 53 Wälzkörper in Form von Kugeln 54, einer inneren Wälzlaufbahn 55 sowie einer äußeren Wälzlaufbahn 56 jeweils für die Kugeln 54 gebildet. Das zweite Stützlager 51 ist aus einer zweiten Reihe 57 als Kugeln 58 ausgebildete Wälzkörper, aus einer inneren Wälzlaufbahn 59 sowie aus einer äußeren Wälzlaufbahn 60 jeweils für die Kugeln 58 gebildet.

Die Kugeln 54 der Reihe 53 liegen in einer Radialebene 61 und die Kugeln 58 der Reihen 57 liegen in einer Radialebene 62, welche jeweils senkrecht von der Rotationsachse 46a der Freilauf-Stützlageranordnung 46 durchstoßen ist. Die Rotationsachse 46a entspricht der Rotationsachse der Freilauf-Stützlagereinheit 47. Die Radialebenen 61 und 62 sind axial mit dem Abstand A zueinander beabstandet.

Der Radius R1 des durch die Kugelzentren 54a verlaufenden Teilkreises 63 der Reihe 53 Kugeln 54 ist kleiner als der Radius R2 des durch die Kugelzentren 58a verlaufenden Teilkreises 64 der Kugeln 58. Der Radius R2 des Teilkreises 64 der Kugeln 58 ist kleiner als der Radius R3 des die Rollenachsen schneidenden Teilkreises 65 der Klemmrollen 66 des Freilaufs 52. Die Teilkreise 63 und 64 liegen mit dem axialen Abstand A voneinander entfernt in den Radialebenen 61 und 62.

Die Schräglager 50' und 51' weisen gemeinsam einen ersten Lagerring 67 und einen zweiten Lagerring 68 auf. Der erste Lagerring 67 ist einteilig ausgebildet. An dem ersten Lagerring 67 ist die äußere Wälzlaufbahn 56 der ersten Reihe 53 und die äußere Wälzlaufbahn 60 der zweiten Reihe 57 ausgebildet. Der zweite Lagerring 68 ist zweiteilig aus den Teilen 68a und 68b gebildet. Das Teil 68a ist mit der inneren Wälzlaufbahn 55 der ersten Reihe 53 und an das Teil 68b mit der inneren Wälzlaufbahn 59 der zweiten Reihe 57 versehen. Die Lagerringe 67 und 68 sind an dem Radialspalt 69, um die Rotationsachse 46a relativ zueinander rotierbar, radial zueinander beabstandet. Die Schräglager 50' und 51' sind gegeneinander verspannt, in dem das Teil 68b an dem außenzylindrischen Abschnitt 68d auf das Teil 68a geschoben und federelastisch gegen die Kugeln 58 vorgespannt wird, wodurch sich gleichzeitig das Teil 68a federelastisch an den Kugeln 54 abstützt.

Der Freilauf 52 weist eine Freilaufbahn 69 und einen Freilaufring 70 sowie als Klemmelemente 71 die Klemmrollen 66 auf. Die Freilaufbahn 69 ist direkt in das Material des Lagerrings 67 eingebracht und an einem innenzylindrischen Abschnitt 67a des Lagerrings 67 ausgebildet. Der Freilaufring 70 sitzt fest auf einem außenzylindrischen Abschnitt 68c des Lagerrings 68. Das Maschinenelement 48 sitzt außen fest auf dem Lagerring 67 und der Lagerring 68 sitzt entweder außen fest auf dem als Wellenzapfen ausgebildeten Wellenelement 73. Alternativ oder zugleich ist die Freilauf-Stützlagereinheit 47 an einem gestrichelt dargestellten Maschinenelement 72 befestigt, das eine Trommel, ein hohler Zapfen, eine Hohlwelle oder ein anderes Maschinenelement sein kann, befestigt. Dazu ist der Lagerring 68 mit einem Abschnitt 68e in das Maschinenelement 72 eingepresst und/oder mit dem Abschnitt 68c auf dieses aufgepresst. Der Vorteil liegt darin, dass für das Stützlager 50 kein separater axialer Bauraum benötigt wird. Im Fall, dass die Freilauf-Stützlagereinheit 47 an beiden Elementen 73 oder 72 befestigt ist, kann ein Vorteil darin liegen, dass eines der Elemente 73 oder 72 das andere Wellenelement 72 oder 73 antreibt. Das Teil 68b des Lagerrings 68 dient in diesem Fall als drehmomentfestes Verbindungselement zwischen den Elementen 73 und 72.

### Bezugszeichen

| | | | |
|---|---|---|---|
| 1 | Freilauf-Stützlagereinheit | 34 | zweite Reihe Kugeln 35 |
| 1a | Rotationsachse | 35 | Kugel |
| 2 | erstes Stützlager | 36 | innere Wälzlaufbahn |
| 2' | Schräglager | 37 | äußere Wälzlaufbahn |
| 3 | zweites Stützlager | 38 | Kontaktlinie |
| 3' | Schräglager | 39 | Teilkreis |
| 4 | Freilauf | 40 | Teilkreis |
| 5 | Reihe Kugeln 6 | 41 | Teilkreis |
| 5a | Kontaktlinie | 42 | Klemmrolle |
| 6 | Kugel | 43 | erster Lagerring |
| 6a | Kugelzentrum | 44 | zweiter Lagerring |
| 6b | Kontakt | 44a | erstes Teil |
| 6c | Kontakt | 44b | zweites Teil |
| 7 | innere Wälzlaufbahn | 44c | zylindrischer Abschnitt |
| 8 | äußere Wälzlaufbahn | 44d | außenzylindrischer Abschnitt |
| 9 | zweite Reihe 9 Kugeln 13 | 45 | Kontaktlinie |
| 9a | Kontaktlinie | 46 | Freilauf-Stützlageranordnung |
| 10 | Radialebene | 46a | Rotationsachse |
| 11 | innere Wälzlaufbahn | 47 | Freilauf-Stützlagereinheit |
| 12 | äußere Wälzlaufbahn | 48 | Maschinenelement |
| 13 | Kugel | 49 | Klemmelement |
| 13a | Kugelzentrum | 50 | erstes Stützlager |
| 13b | Kontakt | 50' | Schräglager |
| 13c | Kontakt | 51 | zweites Stützlager |
| 14 | Teilkreis | 51' | Schräglager |
| 15 | Teilkreis | 52 | Freilauf |
| 16 | Teilkreis | 53 | erste Reihe Kugeln 54 |
| 17 | Klemmrollen | 54 | Kugel |
| 18 | Lagerring | 54a | Kugelzentrum |
| 18a | innenzylindrischer Abschnitt | 55 | innere Wälzlaufbahn |
| 19 | Lagerring | 56 | äußere Wälzlaufbahn |
| 19a | Teil | 57 | zweite Reihe Kugeln 58 |
| 19b | Teil | 58a | Kugelzentrum |
| 19c | zylindrischer Abschnitt | 59 | innere Wälzlaufbahn |
| 19d | außenzylindrischer Abschnitt | 60 | äußere Wälzlaufbahn |
| 20 | Radialspalt | 61 | Radialebene |
| 21 | Klemmelement | 62 | Radialebene |
| 22 | Freilauf-Stützlageranordnung | 63 | Teilkreis |
| 22a | Rotationsachse | 64 | Teilkreis |
| 22b | Freilaufring | 65 | Teilkreis |
| 22c | Freilaufring | 66 | Klemmrolle |
| 23 | Freilauf-Stützlagereinheit | 67 | erster Lagerring |
| 24 | Maschinenelement | 68 | zweiter Lagerring |
| 25 | Wellenelement | 68a | Teil |
| 26 | erstes Stützlager | 68b | Teil |
| 26' | Schräglager | 68c | zylindrischer Abschnitt |
| 27 | zweites Stützlager | 68d | außenzylindrischer Abschnitt |
| 27' | Schräglager | 69 | Freilaufring |
| 28 | Freilauf | 70 | Freilaufring |
| 29 | Riemen | 71 | Klemmelement |
| 30 | erste Reihe Kugeln 31 | 72 | Maschinenelement |
| 31a | Kugelzentrum | 73 | Wellenelement |
| 31b | Kontakt | | |
| 31c | Kontakt | | |
| 32 | innere Wälzlaufbahn | | |
| 33 | äußere Wälzlaufbahn | | |

## Patentansprüche

1. Freilauf-Stützlageranordnung (22, 46) für ein Maschinenelement (24, 48) mit wenigstens einem Freilauf (4, 28, 52) und mit zumindest zwei gegeneinander angestellten Schräglagern (2', 3', 26', 27', 50', 51') als Stützlager (2, 3, 26, 27, 50, 51), wobei das Maschinenelement (24, 48) mittels der Schräglager (2', 3', 26', 27', 50', 51') an einem Wellenelement (25, 71) um eine Rotationsachse (1a, 22a, 46a) drehbar gelagert ist und wobei mittels des Freilaufes (4, 28, 52) zwischen dem Wellenelement (25, 71) und dem Maschinenelement (24, 48) eine drehmomentfeste Verbindung einrück- und ausrückbar ist, und wobei die Stützlager (2, 3, 26, 27, 50, 51) gegenüber dem Freilauf (4, 28, 52) radial versetzt sind, **dadurch gekennzeichnet, dass** die Schräglager (2', 3', 26', 27', 50', 51') sich im Radius voneinander unterscheidende Teilkreise (14, 15, 39, 40, 63, 64) aufweisen.

2. Freilauf-Stützlageranordnung nach Anspruch 1, **dadurch gekennzeichnet, dass** wenigstens ein Schräglager (2', 3', 26', 27', 50', 51') gegenüber dem Freilauf (4, 28, 52) radial versetzt ist.

3. Freilauf-Stützlageranordnung nach Anspruch 1, **dadurch gekennzeichnet, dass** beide Schräglager (2', 3', 26', 27', 50', 51') gegenüber dem Freilauf (4, 28, 52) radial versetzt angeordnet sind.

4. Freilauf-Stützlageranordnung nach Anspruch 1, **dadurch gekennzeichnet, dass** die Teilkreise (14, 15, 39, 40) in einer gemeinsamen von der Rotationsachse (1a, 22a) senkrecht durchstoßenen Radialebene (10) liegen.

5. Freilauf-Stützlageranordnung nach Anspruch 1, **dadurch gekennzeichnet, dass** die auf der Rotationsachse (46a) liegenden Zentren der Teilkreise (63, 64) axial zueinander beabstandet sind.

6. Freilauf-Stützlageranordnung nach Anspruch 1, **dadurch gekennzeichnet, dass** die Schräglager (2', 3', 26', 27', 50', 51') gemeinsam einen ersten Lagerring (18, 43, 67) und einen zweiten Lagerring (19, 44, 68) aufweisen, wobei an dem ersten Lagerring (18, 43, 67) und an dem zweiten Lagerring (19, 44, 68) für jedes der Schräglager (2', 3', 26', 27', 50', 51') jeweils mindestens eine Wälzlaufbahn (7, 8, 11, 12, 32, 33, 36, 37, 55, 56, 59, 60) für eine Reihe (5, 9, 30, 34, 53, 57) Wälzkörper ausgebildet ist und wobei der erste Lagerring (18, 43, 67) drehfest mit dem Wellenelement (25, 71) und der zweite Lagerring (19, 44, 68) drehfest mit dem Maschinenelement (24, 48) verbunden ist.

7. Freilauf-Stützlageranordnung nach dem Oberbegriff des Anspruchs 1, **dadurch gekennzeichnet, dass** die Schräglager (2', 3', 26', 27', 50', 51') einen ersten Lagerring (18, 43, 67) und einen zweiten Lagerring (19, 44, 68) gemeinsam aufweisen, wobei an dem ersten Lagerring (18, 43, 67) und an dem zweiten Lagerring (19, 44, 68) für jedes der Schräglager (2', 3', 26', 27', 50', 51') jeweils mindestens eine Wälzlaufbahn (7, 8, 11, 12, 32, 33, 36, 37, 55, 56, 59, 60) für eine Reihe (5, 9, 30, 34, 53, 57) Wälzkörper ausgebildet ist und wobei der erste Lagerring (18, 43, 67) drehfest mit dem Wellenelement (25, 71) und der zweite Lagerring (19, 44, 68) drehfest mit dem Maschinenelement (24, 48) verbunden ist.

8. Freilauf-Stützlageranordnung nach Anspruch 7, **dadurch gekennzeichnet, dass** Klemmelemente (21, 49, 71) des Freilaufs (4, 28, 52) radial zwischen einem Abschnitt des ersten Lagerrings (18, 43, 67) und einem Abschnitt des zweiten Lagerrings (19, 44, 68) angeordnet sind.

9. Freilauf-Stützlageranordnung nach Anspruch 8, **dadurch gekennzeichnet, dass** die Klemmelemente (21, 49, 71) Klemmrollen (17, 42, 66) sind, wobei die Klemmrollen (17, 42, 66) in Wirkverbindung mit Freilaufbahnen des Freilaufs (4, 28, 52) stehen, zwischen welchen die Klemmrollen (17, 42, 66) umfangsseitig zueinander angeordnet sind und von denen eine Freilaufbahn drehmomentfest dem Maschinenelement (24, 48) und eine drehmomentfest mit dem Wellenelement (25, 71) verbunden ist.

10. Freilauf-Stützlageranordnung nach Anspruch 7, **dadurch gekennzeichnet, dass** die Schräglager (2', 3', 26', 27', 50', 51') sich im Radius voneinander unterscheidende Teilkreise (14, 15, 39, 40, 63, 64) aufweisen.

11. Freilauf-Stützlageranordnung nach Anspruch 10, **dadurch gekennzeichnet, dass** die Teilkreise (14, 15, 39, 40) in einer gemeinsamen von der Rotationsachse senkrecht durchstoßenen Radialebene liegen.

12. Freilauf-Stützlageranordnung nach Anspruch 7, **dadurch gekennzeichnet, dass** die auf der Rotationsachse liegenden Zentren der Teilkreise (63, 64) axial zueinander beabstandet sind.

13. Freilauf-Stützlageranordnung nach Anspruch 7, 11 oder 12, **dadurch gekennzeichnet, dass** beide Schräglager (2', 3', 26', 27', 50', 51') gegenüber dem Freilauf (4, 28, 52) radial versetzt angeordnet sind.
